# EUROPÄISCHE PATENTSCHRIFT

(11) **EP 2 823 203 B1**
(45) Veröffentlichungstag und Bekanntmachung des Hinweises auf die Patenterteilung: **12.08.2020**
(21) Anmeldenummer: 13716965.2
(22) Anmeldetag: 05.03.2013
(51) Int. Cl.: F16H 63/34

(54) **VERRIEGELUNGSEINHEIT, INSBESONDERE FÜR EINE PARKSPERRE EINES AUTOMATIKGETRIEBES**
LOCKING UNIT, IN PARTICULAR FOR A PARKING LOCK OF AN AUTOMATIC TRANSMISSION
UNITÉ DE VERROUILLAGE, EN PARTICULIER POUR UN FREIN DE STATIONNEMENT D'UNE BOÎTE DE VITESSES AUTOMATIQUE

(30) Priorität: 05.03.2012 DE 102012004159
(43) Veröffentlichungstag der Anmeldung: 14.01.2015
(73) Patentinhaber: SVM Schultz Verwaltungs-GmbH & Co. KG, 87700 Memmingen (DE)
(72) Erfinder: MANG, Helmut, 87700 Memmingen (DE); SCHERER, Georg, 87757 Kirchheim (DE)
(74) Vertreter: Patentanwälte Olbricht, Buchold, Keulertz Partnerschaft mbB
(86) Internationale Anmeldenummer: PCT/EP2013/054443
(87) Internationale Veröffentlichungsnummer: WO 2013/131926

(56) Entgegenhaltungen:
- EP-A1- 1 408 260
- DE-A1- 2 034 634
- DE-A1-102008 011 898
- US-A- 3 482 666
- US-A- 4 873 824
- US-A1- 2007 283 735
- US-A1- 2008 236 967

## Beschreibung

Die Erfindung betrifft eine Verriegelungseinheit, insbesondere für die Parksperre eines Automatikgetriebes, für das Verriegeln der Bewegung eines von einem Antrieb bewegbaren, insbesondere mit Druck beaufschlagbaren Kolbens, wobei die Verriegelungseinheit einen Elektromagneten und mindestens ein Rastelement aufweist und das Rastelement mit dem Anker beziehungsweise der Ankerstange des Elektromagneten oder mit einem vom Anker beziehungsweise der Ankerstange gehaltenen Bolzen zusammenwirkt.

Vorgenannte Verriegelungseinheiten finden insbesondere bei der Parksperre von Automatikgetrieben Verwendung. Als Antrieb eines bewegbaren Kolbens wird hierbei der Systemdruck des hydraulischen Kreislaufes des Automatikgetriebes verwendet.

Ein Fahrzeug mit Handschaltgetriebe kann durch Einlegen eines Ganges gegen unbeabsichtigtes Wegrollen im Stillstand bei abgestelltem Motor gesichert werden. Bei Automatikgetrieben ist dies jedoch nicht möglich, da bei abgestelltem Motor kein Kraftschluss zu den Antriebsrädern besteht. Automatikgetriebe haben daher eine mechanische Verriegelung der Getriebeabtriebswelle, die in der Parkstellung zu aktivieren ist, das heißt, einzustellen ist und so ein Wegrollen des Fahrzeuges verhindert.

Die Verriegelungseinheit wirkt dabei zusammen mit dem hydraulischen Kreislauf des Automatikgetriebes. Bei eingelegter Parksperre ist es dabei in der Regel vorgesehen, dass der Kolben entriegelt ist. In der Fahrtstellung, also bei ausgeschalteter Parksperre, ist der bewegte, insbesondere druckbeaufschlagte Kolben verriegelt. Üblicher weise wirkt dabei die Kolbenstange des Kolbens auf eine Blockiereinheit, die in geeigneter Weise in den Antriebsstrang, entsprechend der Stellung der Parksperre eingreift oder nicht.

Eine Verriegelungseinheit der eingangs genannten Art ergibt sich zum Beispiel aus der europäischen Patentschrift 1 408 260.

Das Dokument DE 10 2008 011 898 A1 zeigt eine Schaltvorrichtung eines Kraftfahrzeugs mit wenigstens einer hydraulischen Schalteinheit, welche auf eine von einer Brennkraftmaschine getrennt ausgebildeten Antriebseinheit ausgelegt ist.

Das Dokument DE 20 34 634 zeigt einen pneumatischen Arbeitszylinder mit einem von Druckluft beaufschlagbaren Kolben, dessen Kolbenstange mit einem zu bewegenden Teil in Verbindung steht. Dabei sind Mittel zum Festhalten des Kolbens an einer gewünschten Stelle vorgesehen.

Aus der genannten DE 10 2008 011 898 A ist auch eine Verriegelungseinheit für eine Parksperre bekannt. Diese offenbart in schematischer Sicht einen Stößel, welcher in Rastpositionen eingreift, wobei zwei voneinander getrennte Rastaufnahmen offenbart sind.

Aus der DE 2 034 634 A ist ein pneumatischer Arbeitszylinder bekannt, bei welchem in der Kolbenstange trapezförmige Ausnehmungen ausgebildet sind, in welche ein formkorrespondierendes Formstück eingreift sobald eine konische Kolbenstange das Formstück in die Ausnehmungen verstellt, wobei zwei voneinander getrennte Rastaufnahmen offenbart sind.

Im Stand der Technik sind nur kompakte Verriegelungseinheiten bekannt, die die Stellung des Kolbens in einer Lage festlegen, also fixieren. Wünschenswert wäre es aber, eine Verriegelungseinheit zu haben, die eine Verriegelung, das heißt Festlegen des Kolbens in mehreren unterschiedlichen Lagen erlaubt und trotzdem kompakt ausführbar ist.

Es ist daher Aufgabe der vorliegenden Erfindung, eine Verriegelungseinheit wie bekannt derart zu verbessern, dass eine Festlegung des Kolbens in mehreren Lagen bei gleichzeitig kompakter Bauform möglich ist.

Gelöst ist diese Aufgabe mit der Verriegelungseinheit gemäß Anspruch 1 sowie mit dem Getriebe mit den Merkmalen des Anspruchs 14.

Zur Lösung dieser Aufgabe geht die Erfindung aus von einer Verriegelungseinheit wie eingangs beschrieben und schlägt vor, dass der Kolben mindestens zwei voneinander entfernte Rastaufnahmen aufweist und der Kolben durch das haltende Zusammenwirken des Rastelementes mit der jeweiligen Rastaufnahme in unterschiedlichen Lagen des Kolbens festlegbar ist. Das Rastelement der erfindungsgemäßen Verriegelungseinheit ist zudem derart ausgebildet, dass an dem den Rastaufnahmen nächstliegenden freien Ende des Rastelements wenigstens eine sich radial in Richtung der Rastaufnahmen erstreckende klinkenartige Abwinklung vorgesehen ist.

Durch den erfindungsgemäßen Vorschlag ist es möglich, dass der Kolben in unterschiedlichen axialen Positionen festlegbar ist. Die axiale Position ist dabei durch die Bewegungsrichtung des Kolbens definiert, die Bewegungsrichtung definiert insofern die Achse. Durch die Anordnung von zwei oder noch mehr Rastaufnahmen an dem Kolben in geeigneter weise ist es möglich, in einer beliebigen Anzahl von Positionen eine mechanisch feste Verriegelung des Kolbens zu erreichen. Diese klinkenartige Abwinklung wird, vermittelt durch den an der Ankerstange vorgesehenen Bolzen, in einer Verriegelungs- bzw. Sicherungsposition in die Rastaufnahmen eingedrückt und sichert dort die Verriegelungseinheit.

In einer bevorzugten Ausgestaltung der Erfindung bestehen mehrere Varianten, wie die Anordnung der Rastaufnahmen am Kolben gebildet wird.

In einer ersten Variante ist der Kolbenkopf mit einer Mehrzahl von axial hintereinander angeordneten Rastaufnahmen ausgestattet und das Rastelement der Verriegelungseinheit greift radial von außen nach innen an diesen Rastaufnahmen an. Geschickterweise ist dabei der Kolbenkopf bezüglich der Symmetrieachse des Kolbens zentral beziehungsweise zentrisch angeordnet.

In einer anderen erfindungsgemäßen Variante, die auch in der Zeichnung gezeigt ist, besitzt der Kolben eine Rasthülse, die an ihrer Innenmantelfläche mehrere Rastaufnahmen aufweist.

In dieser erfindungsgemäßen Variante der Verriegelungseinheit taucht das Rastelement bzw. die Rastelemente in die Ausnehmungen der Hülse ein. Die Hülse ist dabei zum Beispiel einstückig mit dem Kolben verbunden und zum Beispiel durch ein zentrisches Ausbohren, als Sacklochbohrung realisiert. Die Rastaufnahmen sind als seitlich umlaufende Umfangsnuten gebildet. Für das Verbinden bzw. das Festlegen des Kolbens wird das Rastelement radial nach außen bewegt, wodurch die Klinke an dem Rastelement in die Rastaufnahme eingreift.

Ein wesentlicher Vorteil der Erfindung liegt insbesondere darin, dass durch die Ausgestaltung des Rastelementes, insbesondere bei der flächigen Ausgestaltung der Klinke an dem Rastelement eine übermäßige Materialbeanspruchung des Rastelementes vermieden wird, da die Belastung flächig am Rastelement abgetragen wird und nicht punktuell wirkt.

Die Verriegelungseinheit gemäß einer bevorzugten Ausführungsform sieht vor, dass die Rastaufnahmen axial beabstandet am Kolben angeordnet sind. Hierbei richtet sich die Beabstandung jeweils nach der durch den Kolben vorgegebenen Geometrie bzw. der Größe der Verriegelungseinheit und der damit einhergehenden gegebenenfalls unterschiedlichen Länge des Kolbens. Die Rastaufnahmen können dabei gleichmäßig axial beabstandet am Kolben angeordnet sein, das heißt, gleiche Abstände zueinander aufweisen oder aber unterschiedliche Abstände haben. Auch dies liegt in der Größe des mit der Verriegelungseinheit auszustattenden Automatikgetriebes begründet. Die Anordnung von mehreren Rastaufnahmen, die axial beabstandet sind, lässt zusätzlich eine Anpassung auf verschiedene Automatikgetriebe und Automatikgetriebegrößen zu und vereinfacht somit die Herstellung der Verriegelungseinheit und erhöht gleichzeitig deren Verwendbarkeit wesentlich.

Als vorteilhaft wird angesehen, wenn der Kolben eine insbesondere in Richtung des Elektromagneten ausgerichtete, die Rastaufnahmen aufweisende, axiale Verlängerung, insbesondere einen Kolbenkopf aufweist. Diese den Kolbenkopf aufweisende bzw. zur Verfügung stellende Verlängerung kann dabei günstigerweise als gesondertes, mit dem Kolben verbindbares Element oder als einstückig mit dem Kolben verbundenes oder aus dem Kolben hervorgehendes Element ausgebildet werden.

Bevorzugt ist die Verlängerung als eine eine innere Mantelfläche aufweisende Rasthülse ausgebildet. Die Rastaufnahmen sind in diesem Zusammenhang als in der inneren Mantelfläche eingebrachte Ausnehmungen vorgesehen. Bezüglich der Ausgestaltung der Ausnehmungen ergeben sich verschiedenste Möglichkeiten. So kann beispielsweise lediglich ein Einschnitt in der Mantelfläche die Ausnehmung zur Verfügung stellen. Gleichzeitig besteht die Möglichkeit, dass hier in der inneren Mantelfläche Ring- oder Halbringnuten eingebracht sind, die dann als Ausnehmung dienen. Die Ring- oder Halbringnuten können dabei eine runde oder eckige Querschnittsform aufweisen. Selbstverständlich besteht auch die Möglichkeit, dass hier ein dreieckförmiger Aus- oder Einschnitt in die innere Mantelfläche eingebracht und damit die Ausnehmung zur Verfügung gestellt wird.

In einer alternativen Ausführungsform ist vorgesehen, dass die Rasthülse durch ein gesondertes, an den Kolben angesetztes Element oder als zentrisch in den Kolben bzw. Kolbenkopf eingebrachte Sacklochbohrung zur Verfügung gestellt ist. Das heißt, der Kolben wird aus beispielsweise einem Vollmaterial gebildet und die Rasthülse dann in diesen eingesenkt, beispielsweise durch Einschneiden oder Einbringen einer Sacklochbohrung. Das Innere der Bohrung stellt dabei dann die innere Mantelfläche der Rasthülse zur Verfügung, in der wiederum die Ausnehmungen bzw. Rastaufnahmen eingebracht sind, die dann mit dem Rastelement zusammenwirken können.

In einer weiteren Ausführungsvariante der erfindungsgemäßen Verriegelungseinheit ist vorgesehen, dass die Verlängerung als axial verlängerter Kolbenkopf mit einer äußeren Mantelfläche ausgebildet ist. Die Rastaufnahme ist dann als in den aus Vollmaterial gebildeten Kolbenkopf bzw. in dessen äußere Mantelfläche eingebrachte Ausnehmung ausgeführt. Gleichfalls umfasst sind mehrere Rastaufnahmen, die in den Kolbenkopf bzw. dessen äußere Mantelfläche eingebracht sind. Auch hier besteht die Möglichkeit, dass die Ausnehmungen als Ring- oder Halbringnuten vorgesehen sind. Gleichermaßen können die Ausnehmungen auch als einfache Einschnitte oder Ausnehmungen im Kolbenkopf bzw. dessen äußerer Mantelfläche ausgebildet werden. Die Geometrie der Ring- bzw. Halbringnuten und/oder sonstigen Ausnehmungen ist ebenfalls variabel und kann halbrund, eckig, dreieckig oder in sonstiger geeigneter, auch auf das Rastelement bzw. die dort vorgesehene klinkenartige Abwinklung angepasster Art und Weise ausgebildet sein.

Das Rastelement, das mit den Rastaufnahmen der äußeren bzw. inneren Mantelfläche des Kolbenkopfes zusammenwirkt, ist günstiger Weise als sich in axialer Richtung des Kolbens wenigstens bis in den Bereich der Rastaufnahmen in den Kolben hinein erstreckende, federnd gelagerte Zunge ausgebildet. Die federnde Lagerung des Rastelements lässt dessen Beaufschlagung durch den Bolzen zu und ermöglicht gleichzeitig, dass das Rastelement beispielsweise bei Abbruch der Strombeaufschlagung des Elektromagneten und damit einhergehender Rückführung des Ankers mit daran angeordnetem Bolzen in eine Ausgangs- bzw. Grundstellung zurückgeführt wird, um dann den Kolben wirksam zu verriegeln bzw. zu blockieren. Die federnde Lagerung des Rastelements bzw. der das Rastelement bildenden Zunge ermöglicht die Bewegung auch ohne zusätzliche äußere Einflüsse, beispielsweise eine Magnetkraft oder dergleichen.

Das Rastelement ist bevorzugt elastisch verformbar ausgebildet, kann somit in die Ausgangsposition, bzw. eine Grundstellung selbsttätig zurückgeführt werden bzw. zurückfedern. Insbesondere begünstigt wird die elastische Verformbarkeit bzw. die federnde Lagerung des Rastelements dadurch, dass dieses aus Federstahl gebildet ist. Federstahl hat den Vorteil, dass dieser beispielsweise auch kalt plastisch verformbar ist, in der Verwendung bzw. im Einbauzustand jedoch mehrere Zyklen einer elastischen Verformung zulässt und damit ein dauerhaftes Rastelement zur Verfügung stellt.

In einer alternativen Ausführungsform ist vorgesehen, dass das Rastelement eine entsprechende Vorspannung aufweist, so dass bei Ende der Beaufschlagung des Rastelements durch den Bolzen ein selbständiges Rückfedern in die Verriegelungsposition stattfindet.

Die klinkenartige Abwinklung am Rastelement ist erfindungsgemäß flächig ausgebildet. Sie kann bevorzugt mit einer wenigstens eine entsprechende Größe oder Breite aufweisenden Rastaufnahme in Eingriff stehen. Als günstig wird in diesem Zusammenhang angesehen, wenn die Länge der klinkenartigen Abwinklung im Wesentlichen der Tiefe der Rastaufnahmen entspricht. Durch vollflächiges Aufliegen der klinkenartigen Abwinklung auf oder in der Rastaufnahme kommt es zu einer vorteilhafteren Kraftverteilung und damit zum sicheren Betrieb der Verriegelungseinheit.

Eine vorteilhafte Weiterbildung der erfindungsgemäßen Verriegelungseinheit sieht vor, dass bei unbestromtem Elektromagneten der Bolzen derart positionierbar ist, dass das Rastelement aus einer Verriegelungsposition in eine Entriegelungsposition der Verriegelungseinheit bringbar ist. Bei bestromtem Elektromagnet wirkt der Bolzen demgegenüber derart auf das Rastelement ein, dass dieses aus einer Entriegelungsposition in eine Verriegelungsposition bringbar ist. Durch axiale Verschiebung des Bolzens wird in einer Ausführungsform das Rastelement radial nach außen geführt, um dort mit den Rastaufnahmen in Eingriff gebracht zu werden. In einer weiteren Variante der Erfindung ist vorgesehen, dass der Bolzen derart auf das Rastelement wirkt, dass im bestromten Zustand die klinkenartige Abwinklung am Rastelement aufgrund der radialen Verschiebung bzw. Verschwenkung des Rastelements aus den Rastaufnahmen bewegt wird. Beide Ausführungsvarianten sind von der Erfindung umfasst. Während im unbestromten Zustand in einer ersten Variante der erfindungsgemäßen Verriegelungseinheit der Bolzen derart positioniert ist, dass aufgrund der Vorspannung des Rastelements dieses mit der Ausnehmung im Kolbenkopf in Eingriff steht kann alternativ auch vorgesehen werden, dass im unbestromten Zustand des Elektromagneten der Bolzen derart positioniert ist, dass dieser nicht am Rastelement angreift und dieses daher aufgrund der Vorspannung aus der Rastaufnahme gehoben wird und diese damit freigibt. Im erstgenannten Fall weist das Rastelement eine entsprechende Ausgestaltung, beispielsweise einen Vorsprung oder eine Verdickung auf der mit dem Bolzen in Wirkverbindung tritt.

Als vorteilhaft wird angesehen, wenn das Rastelement eine relativ zur Kolbenlängsachse gesehen radial nach außen oder radial nach innen gerichtete Vorspannung aufweist. Dies begünstigt die Betätigung des Rastelements und den Eingriff mit den Rastaufnahmen bzw. das Zusammenwirken mit dem verschiebbar gelagerten Bolzen, der am Anker des Elektromagneten angebracht ist.

In einer weiteren Ausführungsform der erfindungsgemäßen Verriegelungseinheit ist vorgesehen, dass bei bestromtem Elektromagneten der Bolzen oder Bolzenring derart positionierbar ist, dass das Rastelement aus einer Verriegelungsposition in eine Entriegelungsposition bringbar ist und bei unbestromtem Elektromagneten der Bolzen oder Bolzenring derart auf das Rastelement einzuwirken vermag, dass dieses aus einer Entriegelungsposition in eine Verriegelungsposition bringbar ist. In diesem Fall wird durch die bestromungsbedingte Verschiebung des Ankers im Elektromagneten und die damit einhergehende Bewegung des Bolzens eine Aushebung des Rastelementes bzw. der daran angeordneten Klinke aus der Verriegelungsposition erreicht. Wird die Bestromung des Elektromagneten beendet und fällt der Anker vom Elektromagneten ab, so wird der Bolzen relativ zum Rastelement verschoben und verbringt dieses wieder in Eingriff mit der Rastaufnahme und erzielt somit eine Verriegelung des Kolbens. Die Rückstellfeder, die in einer Weiterbildung der Erfindung dem Bolzen, Bolzenring und/oder der Ankerstange zugeordnet ist, bewirkt dann bei dem unbestromten Elektromagneten eine Rückstellung des Bolzens und/oder Anker in die Verriegelungsposition des Rastelementes. Im bestromten Zustand des Elektromagneten ist die Rückstellfeder bevorzugt durch die Ankerbewegung komprimierbar, trägt jedoch im unbestromten Zustand des Elektromagneten ein in axialer Richtung von dem Elektromagneten weg gerichtete Rückstellkraft in den Anker ein und bewegt dabei den Bolzen oder Bolzenring, wodurch das Rastelement mit der Rastaufnahme in Eingriff gebracht wird.

Als günstig wird in diesem Zusammenhang angesehen, wenn in einer ersten Rastposition eine axiale Bewegung des Kolbens auf den Elektromagneten zu und in einer zweiten Rastposition eine axiale Bewegung des Kolbens von dem Elektromagneten weg blockierbar ist. Hierzu weist der Kolben entsprechend positionierte Rastaufnahmen auf, die mit dem Rastelement je nach Kolbenstellung in Eingriff bringbar sind.

Das Rastelement ist bevorzugt starr oder elastisch, insbesondere mit oder ohne Vorspannung ausgebildet und kann somit je nach Bolzenkonfiguration in die Rastposition selbständig einspringen bzw. selbsttätig oder aufgrund der Vorspannung aus der Rastposition ausgehoben werden.

Eine als günstig angesehene Weiterbildung der Erfindung sieht vor, dass zwei oder mehr Rastelemente koaxial zum Bolzen, Bolzenring bzw. Bolzenkopf vorgesehen sind. Dies erweist sich insbesondere dann von Vorteil, wenn der Kolben bzw. Kolbenkopf zylindrisch ausgebildet ist und eine Innenfläche zur Verfügung stellt, in der die Rastaufnahmen angeordnet sind, die dann mit den Rastelementen bzw. den daran angeordneten klinkenartigen Abkantungen bzw. Klinken in Eingriff gebracht werden.

Der Bolzen bzw. Bolzenring weist günstiger Weise einen umlaufenden Vorsprung oder Flansch auf, der mit einem am Rastelement angeordneten Nocken in Wirkverbindung bringbar ist. Als vorteilhafte Weiterbildung wird angesehen, wenn der Vorsprung oder Flansch konisch ausgebildet ist und somit besonders einfach auf den an dem Rastelement vorgesehenen Nocken aufgleitet bzw. über diesen hinweggleiten kann, um das Rastelement zu betätigen, insbesondere in die Rast- bzw. Verriegelungsposition zu bringen oder aus dieser auszuheben.

Die erfindungsgemäße Verriegelungseinheit sieht in einer bevorzugten Weiterbildung vor, dass die Rückstellfeder einerseits am Elektromagneten bzw. am oder im Joch des Elektromagneten und andererseits am Bolzen, Bolzenring bzw. einen am Bolzen oder Bolzenring vorgesehenen Vorsprung oder Flansch sich abstützt. Hierdurch wird eine besonders günstige Federführung und damit eine zufriedenstellende Funktion der Rückstellfeder erreicht, nämlich die Betätigung des Bolzens oder Bolzenrings durchzuführen und damit eine Betätigung des Rastelementes zu erreichen.

Als günstig wird angesehen, wenn die Ankerstange einen umlaufenden Rand aufweist, an dem der Bolzen oder Bolzenring anliegt. Hierdurch wird eine Anschlagsfläche für den Bolzen bzw. Bolzenring geschaffen und verhindert, dass der Bolzen auf der Ankerstange in axialer Richtung verschoben wird. Der Vorsprung bzw. Flansch kann an der Ankerstange angeformt bzw. bei deren Herstellung in diese eingeformt werden.

Eine vorteilhafte Weiterbildung sieht vor, dass das Rastelement eine mit dem Bolzen in Wirkverbindung stehende Fläche zur Verfügung stellt und bei Bewegung des Bolzens in axialer Richtung der Verriegelungseinheit an oder über die Fläche, das Rastelement bzw. die klinkenartige Abwinklung in die bzw. aus der Rastaufnahme bewegbar ist.

In der erfindungsgemäßen Verriegelungseinheit bzw. einer bevorzugten Ausführungsform davon ist vorgesehen, dass der Bolzen eine sich in Richtung der Ankerstange konisch verjüngende Bolzenspitze aufweist. Die konisch sich verjüngende Bolzenspitze liegt an der Fläche an und bei Bewegung der Bolzenspitze über die Fläche bzw. einen Flächenabschnitt in axialer Richtung der Verriegelungseinheit erfolgt, bezogen auf die Kolbenlängsachse, eine Bewegung des Rastelements radial nach außen gerichtet, die axiale Bewegung des Bolzens wird damit entgegen der Vorspannung des Rastelements in dessen radiale Bewegung umgesetzt.

Weiterhin als günstig wird angesehen, wenn das Rastelement eine mit dem Bolzen bzw. der Bolzenspitze in Anlage bringbare, insbesondere konisch ausgebildete Verdickung aufweist. Eine Relativbewegung von Bolzen bzw. Bolzenspitze und Verdickung wird dabei in eine bezogen auf die Kolbenlängsachse radial nach außen gerichtete Radialbewegung des Rastelements bzw. der klinkenartigen Abwinklung umgesetzt. Das Rastelement wird dabei insbesondere entgegen der Vorspannung des Rastelements bewegt und es kommt zum Ab- oder Ausheben der klinkenartigen Abwinklung aus der Rastaufnahme.

Das Rastelement ist günstiger Weise in der Verriegelungseinheit, insbesondere im Bereich des der Kolbenstange diametral gegenüberliegenden Endes der Verriegelungseinheit federnd angelenkt. Als günstig wird in diesem Zusammenhang angesehen, wenn ein Anlenkpunkt an dem in die Verriegelungseinheit einstehenden Elektromagneten bzw. einem den Elektromagneten in Richtung der Verriegelungseinheit abschließenden Joch vorgesehen ist. Dort kann das Rastelement beispielsweise über einen Splint, eine Punktklebung oder Punktschweißung oder in sonstiger, dem Fachmann geläufiger und geeigneter Art und Weise befestigt werden, derart, dass ein Federn des Rastelements gleichwohl möglich bleibt.

Das den Elektromagneten bzw. die Verriegelungseinheit abschließende Joch weist bevorzugt einen zurückgesetzten Umfangsbereich auf, an dem der Anlenkpunkt vorgesehen ist.

Eine günstige Weiterbildung der Verriegelungseinheit sieht vor, dass sich die klinkenartige Abwinklung radial in Richtung auf das Kolbenzentrum zu oder aber, in einer alternativen Ausführungsform, radial vom Kolbenzentrum weg erstreckt. Die Verriegelungseinheit in einer weiteren günstigen Ausführungsform sieht vor, dass eine Bewegung des Bolzens bzw. Bolzenkopfes in eine radiale Bewegung des Rastelements umsetzbar ist und die klinkenartige Abwinklung in Abhängigkeit von der Vorspannung des Rastelements von einer Verriegelungs- in eine Freigabeposition bringbar ist bzw. von einer Freigabe- in eine Verriegelungsposition zurückgeführt wird. Beide Ausführungsvarianten sind von der Erfindung umfasst. Entscheidend für die Wahl der Ausführungsvariante ist die Ausgestaltung des Kolbens bzw. Kolbenkopfes und die vorgesehene Anordnung der Rastaufnahmen.

Der Bolzen weist in einer vorteilhaften Weiterbildung eine der Ankerbewegung des Elektromagneten entgegenwirkende Rückstellfeder auf. Hierdurch wird erreicht, dass bei Ende der Bestromung des Elektromagneten der Anker und damit der Bolzen in eine Ruhe- oder Grundposition zurückgeführt wird. Je nach Ausgestaltung der Verriegelungseinheit wird durch diese Rückführung eine Bewegung des Rastelements bewirkt. Abhängig von der Vorspannung des Rastelements bewegt sich dieses dann relativ zu den Rastaufnahmen.

Die Rückstellkraft der Feder wird unterstützt durch die federnde Lagerung des Rastelements, ds bei Abfallen des Ankers auf den dann in axialer Richtung bewegbaren Bolzen einwirkt und diesen in die Grund- bzw. Ruhestellung drückt. Unterstützt wird dies durch die abgeschrägten Flächen des konisch ausgebildeten Bolzens, die mit dem Rastelement in Wirkverbindung stehen bzw. durch diese geführt werden.

Die Erfindung umfasst auch ein Getriebe, insbesondere ein Automatikgetriebe mit einer Parksperre mit einer wie zuvor ausgeführten Verriegelungseinheit.

In der Zeichnung ist die Erfindung insbesondere in einem Ausführungsbeispiel schematisch dargestellt. Es zeigen:
- Fig. 1, Fig. 2, Fig. 3: im Schnitt eine erfindungsgemäße Verriegelungseinheit in verschiedenen Stellungen;
- Fig. 4, Fig. 5, Fig. 6: eine weitere mögliche Ausführungsform der Verriegelungseinheit;
- Fig. 7: eine weitere mögliche Ausführungsform der Verriegelungseinheit; und
- Fig. 8, Fig. 9, Fig. 10, Fig. 11: ein Beispiel einer nicht von den Ansprüchen umfassten Verriegelungseinheit in verschiedenen Stellungen.

In den Figuren sind gleiche oder einander entsprechende Elemente jeweils mit den gleichen Bezugszeichen bezeichnet und werden daher, sofern nicht zweckmäßig, nicht erneut beschrieben.

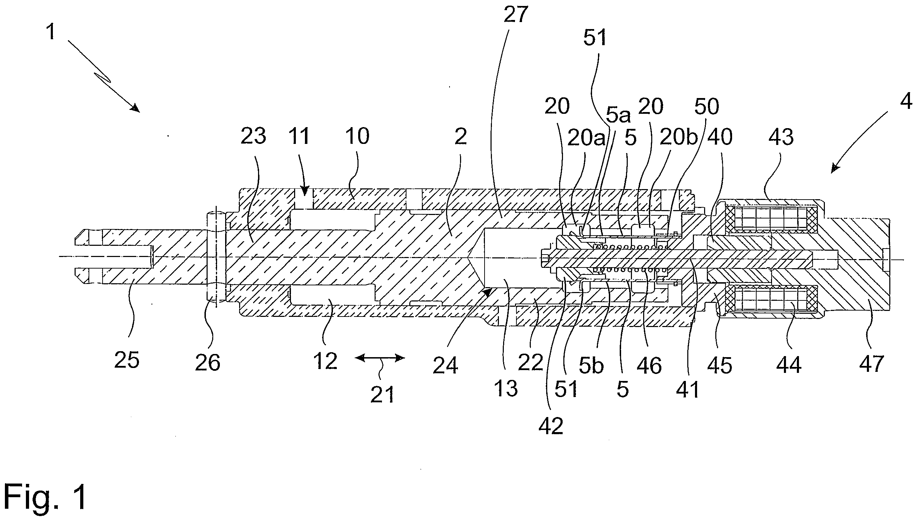

In Fig. 1 ist der schematische Aufbau einer erfindungsgemäßen Verriegelungseinheit 1 schematisch dargestellt. Die Verriegelungseinheit 1 besteht aus einem Gehäuse 10, das den Kolben 2 aufnimmt. Der Kolben 2 ist in dem Gehäuse 10 beweglich gelagert. Der Kolben 2 ist über die Anschlussleitung 11 und den Druckraum 12 derart mit Druck aus einem hydraulischen Kreislauf, zum Beispiel eines Automatikgetriebes beaufschlagbar, so dass der Kolben 2 z. B. nach rechts, angedeutet durch den Doppelpfeil 21, bewegbar ist.

Das Gehäuse 10 besitzt an einer Seite eine Bohrung, durch welche die Kolbenstange 23, die den Kolben 2 bildet, nach außen geführt ist. Die Kolbenstange 23 trägt an ihrem, dem Kolbenkopf 24 abgewandten Seite zum Beispiel ein Blockierelement 25, das in der Parkstellung eine mechanische Verriegelung des Getriebes bewirkt.

Das Gehäuse 10 wird auf der die Kolbenstange 23 aufnehmenden

Bohrung gegenüberliegenden Seite durch den aufgesetzten Elektromagneten 4 verschlossen. Dabei besitzt der Elektromagnet 4 selbst ein entsprechendes Spulengehäuse 43.

Der Aufbau des Elektromagneten ist wie allgemein üblich durch eine Spule 44 gekennzeichnet, die Wicklungen eines von elektrischem Strom durchfließbaren Drahtes trägt.

Ein Anker 40 taucht zumindest teilweise in das Spuleninnere der Spule 44 ein. Der Anker 40 ist axial beweglich gelagert. Als Achse wird hierbei zum Beispiel die Spulenachse der Spule 44 verstanden. In Richtung des Kolbens 2 schließt sich am Elektromagneten 4 ein Joch 45 an, das auch gleichzeitig als axiale Führung des Ankers 40 wirkt. Das Joch 45 besitzt eine Bohrung, durch welche die Ankerstange 41 aus dem Spuleninneren in Richtung des Kolbens 2 bzw. in das Gehäuse 10 hineinragt. Der Anker 40 ist auf der Ankerstange 41 axial fest verbunden, derart, dass die Bewegung des Ankers 40 gleichartig auf die Ankerstange 41 übertragen wird.

An der dem Gehäuseinneren 13 zugewandten Jochseite des Joches 45 ist das Rastelement 5 beweglich, zumindest flexibel verbiegbar oder federnd gelagert angeordnet. Das Rastelement 5 ist dabei um die Lagerstelle 50 verschwenkbar, zumindest aber flexibel auslenkbar. Das Rastelement 5 erstreckt sich dabei in das Gehäuseinnere 13, das Rastelement 5 trägt an seinem der Lagerstelle 50 abgewandten Ende eine nach außen gerichtete Klinke 51, bzw. klinkenartige Abwinklung, die mit einer Rastaufnahme 20 der Rasthülse 22 des Kolbens 2 zusammenzuwirken vermag.

Der Anker 40 reagiert auf ein Magnetfeld. Wird nun der Strom durch die Spulenwicklungen der Spule 44 eingeschaltet, so bildet sich ein Magnetfeld aus, in welchem sich der Anker 40 zu orientieren sucht. In dem in Fig. 1 gezeigten Ausführungsbeispiel ist der Stromfluss eingeschaltet, der Anker 40 ist gegen die Kraft einer Rückstellfeder 46 nach rechts verschoben, ein möglicher Luftspalt zwischen dem Anker 40 und dem Kern 47 ist geschlossen.

Der Kolben 2 besitzt an seinem Kolbenkopf 24 eine einstückig angeordnete Rasthülse 22. Diese Rasthülse 22 ist zum Beispiel durch eine Sacklochbohrung, die zentrisch - bezogen auf die Rotations- oder Symmetrieachse des Kolbens - angeordnet ist, in dem Kolbenkopf 24 vorgesehen.

Auf der Ankerstange 41 befindet sich endseitig ein Bolzen 42, dessen Mantelfläche mit der Innenseite des Rastelementes 5, im Bereich der Klinke 51 zusammenwirkt. In der aktivierten Stellung der Verriegelungseinheit, also bei strombeaufschlagter Spule 44, wird der Bolzen 42 durch die Ankerstange 41 derart versetzt, dass die Rastelemente an dem Bolzen anliegen und aufgrund des Durchmessers des Bolzens und der Lage des Rastelementes das Rastelement nach außen abgelenkt wird. In diese Situation kommt dann die Klinke 51 in Eingriff mit einer am Kolben 2 vorgesehenen Rastaufnahme 20, 20a, 20b.

An dem Kolben ist in geeigneter Weise die Rastaufnahme 20, 20a, 20b vorgesehen, wobei bei dem hier gezeigten Ausführungsbeispiel der Kolben einstückig eine Rasthülse 22 trägt, die an ihren Innenmantelflächen eine ringartig umlaufende nutartige Rastaufnahme 20, 20a, 20b aufweist. In axialer Richtung, bezogen auf die Bewegungsrichtung 21, sind hier nun mehrere Rastaufnahmen 20a, 20b vorgesehen. Bei aktivierter Verriegelungseinheit drückt der zurückgezogene Bolzen 42 die an den Rastelementen endseitig angeordneten Klinken 51 in die Rastaufnahmen 20, was zu einer entsprechenden Festlegung bzw. Blockierung oder Verriegelung des Kolbens 2 in der jeweiligen Stellung führt.

Die Ausgestaltung des Kolbens 2 mit einer Rasthülse 22 hat den Vorteil, dass so eine platzsparende Anordnung realisierbar ist.

In axialer Richtung, bezogen auf die Bewegungsrichtung 21 des Kolbens 2 sind hier nun mehrere axial voneinander versetzt angeordnete Rastaufnahmen 20a, 20b vorgesehen, die, wenn sie in entsprechender Lage zum Rastelement 5 positioniert sind, mit diesem haltend, den Kolben 2 blockierend zusammenwirken.

In dem in Fig. 1 gezeigten Ausführungsbeispiel greifen die Rastelemente 5, 5a, 5b in die innere, linke Rastaufnahme 20a ein. Das Eingreifen erfolgt dabei derart, dass der Klinkenrand bzw. die Klinkenfläche der Klinke 51 an der Nutwand der nutartigen Rastaufnahme 20, 20a, 20b haltend anliegt und eine weitere axiale Bewegung des Kolbens 2 sowohl nach links wie nach rechts, also in das Gehäuse 10 eintauchend oder austauchend, vermeidet. Die resultierende Beweglichkeit in der Verriegelungsstellung ist durch die axiale Breite der nutartigen Rastaufnahme 20 angegeben.

Für eine weitere mechanische Entlastung der einzelnen Rastelemente 5 ist vorgesehen, dass die erfindungsgemäße Verriegelungseinheit 1 eine Vielzahl von Rastelementen 5, 5a, 5b aufweist, die sich in Umfangsrichtung um die Ankerstange 41 herum in gleichem radialen Abstand zueinander äquidistant anordnen. Durch einen entsprechenden rotationssymmetrischen Aufbau wird auch eine gleichartige Betätigung der einzelnen Rastelemente 5, 5a, 5b durch die Aufstellbewegung des angezogenen Bolzens 42 erreicht. Wesentlich bei dieser Anordnung ist auch, dass für die Verriegelungsstellung die Rastelemente 5, 5a, 5b radial nach außen bewegt werden. Diese Bewegung erfolgt durch die Anzugsbewegung des Kolbens 42 durch Strombeaufschlagung der Spule 44. Diese lineare Bewegung wird durch die kegelförmige oder schräge Ausgestaltung des Bolzens 42 derart für die Rastelemente 5, 5a, 5b umgelenkt, dass die freien Enden der Rastelemente, die die Klinke 51 tragen, nach außen gestellt werden und so in die Rastaufnahme 20, 20a, 20b eingreifen.

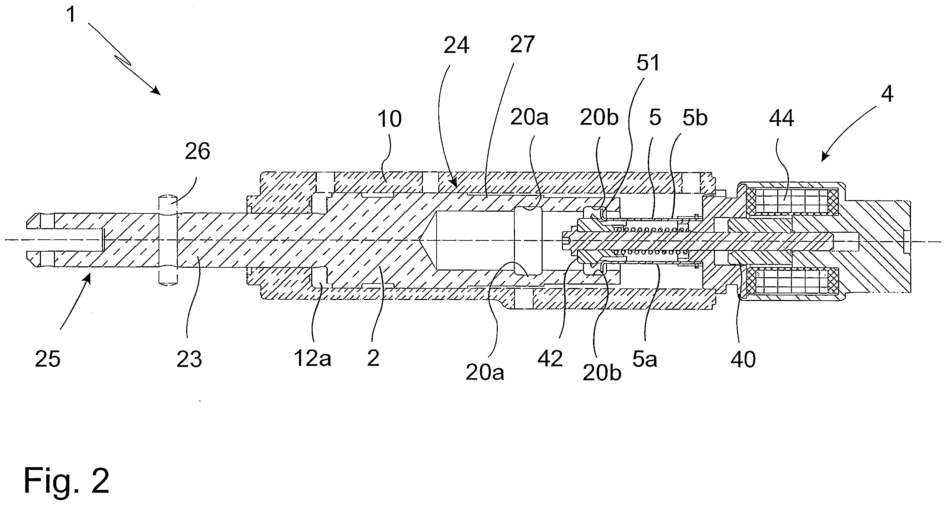

In Fig. 2 ist eine weitere Verriegelungsstellung der Verriegelungseinheit 1 gezeigt, allerdings in einer anderen Lage des Kolbens 2. Die Kolbenstange 23 ist nicht vollständig bis zum Anlagestift in das Gehäuse 10 eingetaucht, sondern nur circa bis zur Hälfte. Es ist gut zu erkennen, dass der Druckraum 12a nach Fig. 2 eine geringere axiale Länge aufweist als der Druckraum 12 nach Fig. 1. In dieser etwas weiter herausgefahrenen Lage ist trotzdem der Kolben 2 verriegelt, indem die Rastelemente 5 in die in der Rasthülse 22 weiter rechts bzw. weiter oben oder außen angeordnete äußere Rastaufnahme 20b haltend eingreifen. Auch in Fig. 2 ist die Spule 44 mit Strom beaufschlagt, wodurch der Anker 40 nach rechts versetzt ist und der angezogene Bolzen 42 die Rastelemente 5, 5a, 5b radial nach außen in die Rastaufnahme 20b schiebt.

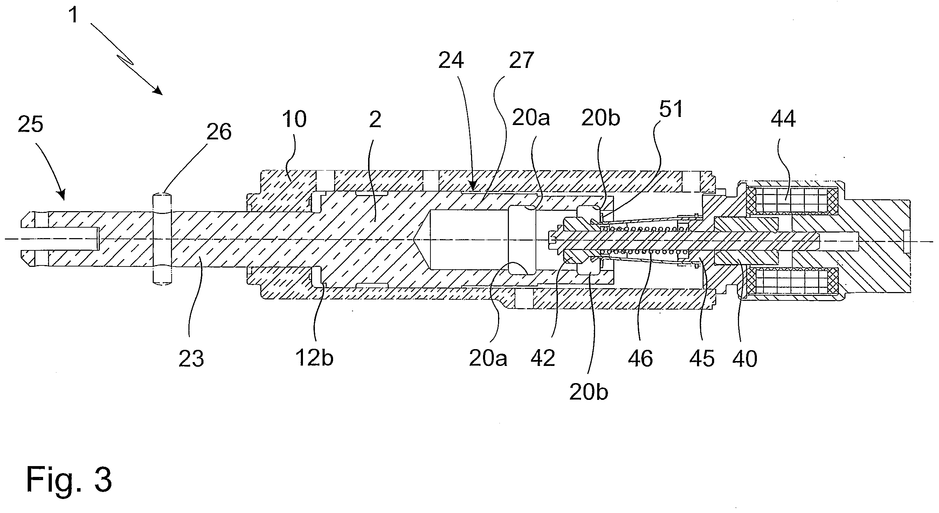

In Fig. 3 ist die dritte Stellung der erfindungsgemäßen Verriegelungseinheit 1 gezeigt. Der Strom durch die Spule 44 ist abgestellt, die Rückstellfeder 46, die zwischen Joch 45 und Bolzen 42 gespannt wird, ist derart entspannt, dass der Anker 40 nach links bis auf Anschlag des Ankers 40 am Joch 45 versetzt ist. Dadurch ist auch der Bolzen 42 so weit nach links versetzt, dass das freie Ende des Rastelementes 5, 5a, 5b nicht mehr radial nach außen gestellt ist, sondern aufgrund der Eigenelastizität nach innen in Richtung der Ankerstange 41 gerichtet ist. Das Rastelement 5, 5a, 5b weist dazu eine entsprechende Elastizität auf. In dieser Stellung taucht die Kolbenstange 23 noch weiter links aus dem Gehäuse 10 heraus. Der Druckraum 12b nach Fig. 3 ist noch kleiner, seine axiale Länge ist deutlich geringer als der Druckraum 12a nach Fig. 2 oder der Druckraum 12 nach Fig. 1. In dieser vollständig entriegelten Stellung kann zum Beispiel das Blockierelement 25 in geeigneter Weise in den Antriebsstrang eingreifen und hier eine Parkstellung bilden.

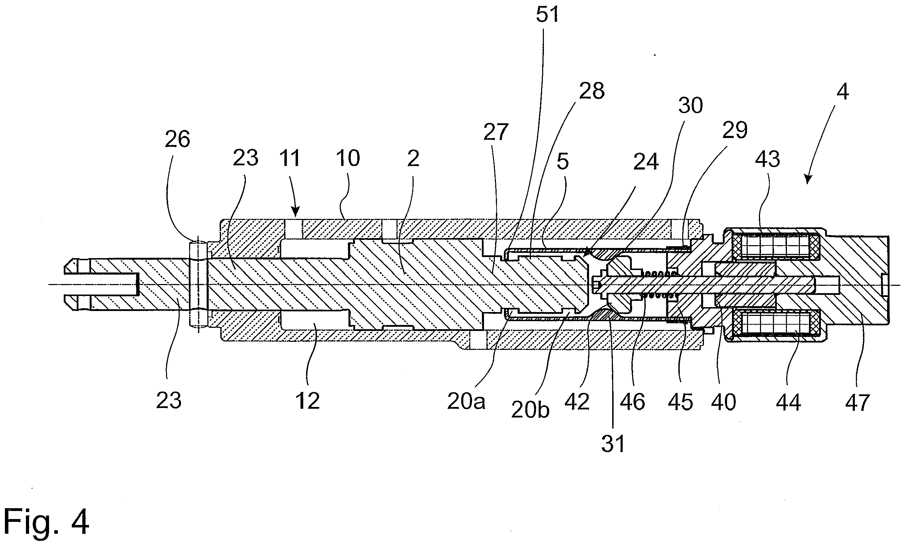

Im Gegensatz zu den zuvor beschriebenen Ausführungsvarianten ist der Kolbenkopf 24 in der in Fig. 4, 5 und 6 gezeigten Ausführungsform als Verlängerung der Kolbenstange 23 in Richtung des Elektromagneten 4 ausgebildet. Der Kolbenkopf weist im Ausführungsbeispiel eine äußere Mantelfläche 28 auf, in die die Rastaufnahmen 20, 20a, 20b eingebracht sind. Die Rastaufnahmen 20,20a,20b sind als Ringnuten ausgebildet. Das Rastelement 5 ist im Ausführungsbeispiel der Fig. 4, 5 und 6 ebenfalls federnd im Gehäuse 10 gelagert. Hierzu stellt das Joch 45 des Elektromagneten 4 einen Anlenkpunkt 29 zur Verfügung, mit dem das Rastelement 5 verbunden ist. Das Rastelement 5 verfügt über eine Klinke 51, die als klinkenartige Abwinklung des Rastelements 5 ausgebildet ist und mit den Rastaufnahmen 20,20a,20b in Eingriff steht, wie dies in Fig. 4 gezeigt ist. Anders als in den Ausführungsformen der Fig. 1 bis 3 ist die Klinke 51 jedoch radial nach innen, das heißt, zum Kolbenzentrum hin ausgerichtet und steht dort mit den Rastaufnahmen 20,20a,20b in Eingriff. Dies wird ermöglicht durch die Ausgestaltung und Anordnung des Bolzens 42.

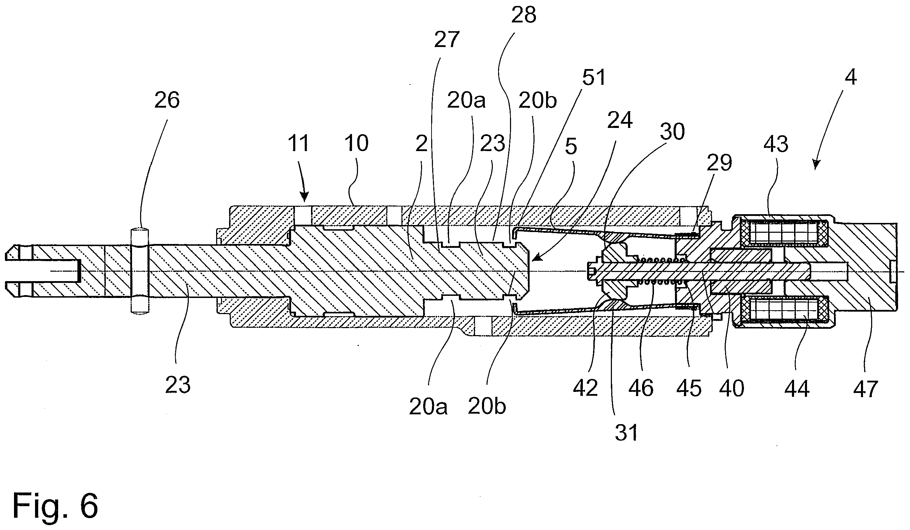

Dieser ist in Fig. 4 im bestromten Zustand gezeigt. In diesem ist der Anker 40 im Elektromagneten 4 angezogen und damit der Bolzen 42 gegenüber dem Kolbenkopf 24 zurückgezogen. Aufgrund der Vorspannung des Rastelements 5 federt dieses in die Verriegelungsposition ein, wobei die Klinke 51 mit den Rastaufnahmen 20,20a,20b in Eingriff gebracht wird. Der Bolzen 42 weist eine konische Abschrägung 30 auf, die an einer Verdickung 31 des Rastelements 5 anliegt. Die Verdickung 31 ist halbrund ausgebildet und kann mit der konischen Abschrägung 30 in Wirkverbindung treten. Dies ist dann der Fall, wenn wie in Fig. 6 dargestellt, der Elektromagnet 4 unbestromt ist und daher der Anker 40 abfällt. Vermittelt durch die Rückstellfeder 46 wird der Bolzen 42 in eine Grundstellung verbracht. Dabei gleitet die Abschrägung 30 des Bolzens 42 auf die Verdickung 31 auf und bewirkt ein Zurückweichen des Rastelements 5 in Richtung des Gehäuses 10. Dabei kommt es zur Freigabe des Kolbenkopfes 24 durch Ausheben der Klinken 51 aus den Rastaufnahmen 20,20a,20b. Der Kolben 24 kann dann frei im Gehäuse 10, das heißt, in axialer Richtung des Gehäuses 10 verschoben werden. Ein zu tiefes Eintauchen der Kolbenstange 23 wird durch das Begrenzungselement 26 verhindert.

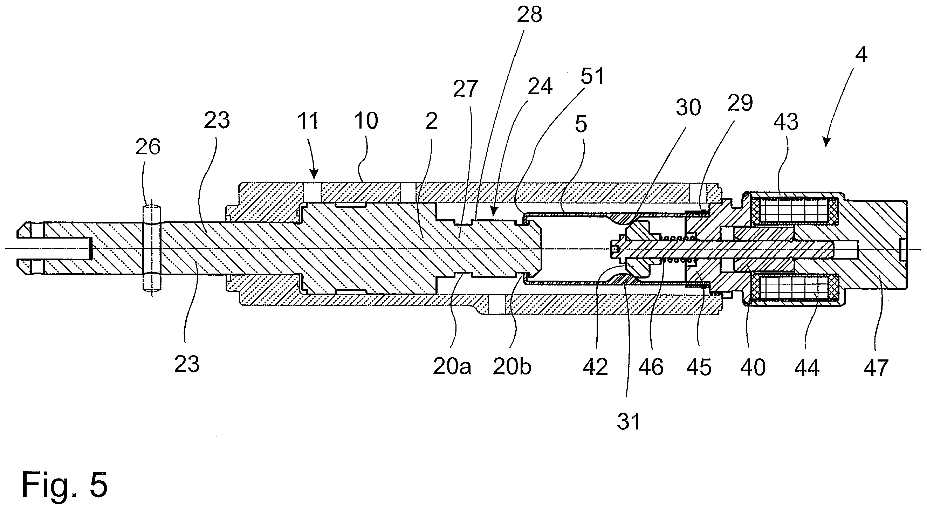

Die Fig. 5 und 6 zeigen eine wie im Zusammenhang mit der Fig. 4 beschriebene Verriegelungseinheit 1. Dargestellt sind hier jeweils unterschiedliche Positionen, wie diese analog bereits im Zusammenhang mit den Fig. 1 bis 3 beschrieben wurden. Während die Fig. 4 und 5 das Rastelement 5 in Eingriff mit dem Kolbenkopf 24 zeigen, zeigt Fig. 6 die gesamte Verriegelungseinheit 1 im unbestromten Zustand des Elektromagneten 4 und das Rastelement 5 bzw. die daran angeordnete Klinke 51 in einer Freigabeposition des Kolbenkopfes 24, das heißt, die Klinken 51 stehen nicht in Eingriff mit den Rastaufnahmen 20, 20a, 20b.

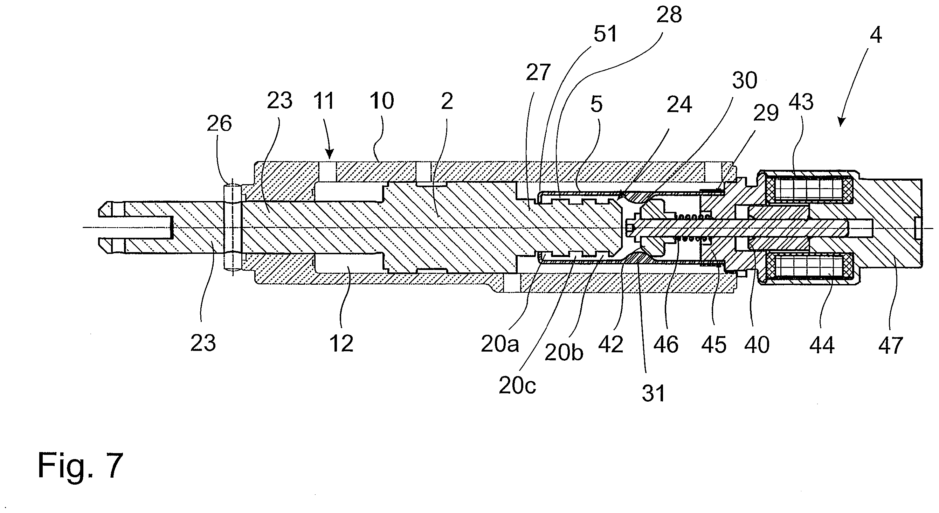

Fig. 7 zeigt eine weitere mögliche Ausführungsform der erfindungsgemäßen Verriegelungseinheit 1, zusätzlich zu den bereits im Zusammenhang mit den vorhergehenden Figuren beschriebenen Rastaufnahmen 20, 20a, 20b weist der Kolbenkopf 24 im Ausführungsbeispiel eine weitere Rastaufnahme 20c auf und ermöglicht somit eine zusätzliche Rastposition für die Klinken 51 der Rastelemente 5. Im Übrigen ist die Funktionsweise und Wirkung der Verriegelungseinheit 1 mit derjenigen identisch, die im Zusammenhang mit den vorhergehenden Figuren beschrieben wurde. Die Klinken 51 werden im Ausführungsbeispiel der Figuren 4 bis 7 radial nach innen bewegt, während in den Ausführungsbeispielen der Figuren 1 bis 3 eine radial nach außen gerichtete, das heißt, auf das Gehäuse 10 zugewandte Radialbewegung der Klinken 51 vorgesehen ist.

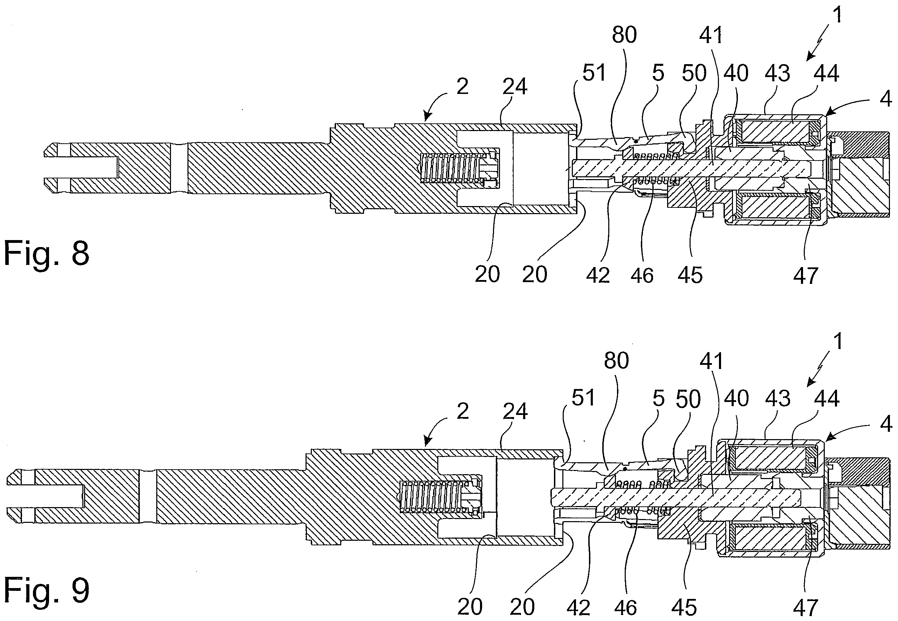

In den Figuren 8 bis 11 ist eine weitere Ausführungsform der erfindungsgemäßen Verriegelungseinheit 1 schematisch dargestellt. Auch hier weist die Verriegelungseinheit 1 einen Kolben 2 auf. Der Übersichtlichkeit halber sind die Einzelbestandteile des Kolbens hier auf die nur für die Beschreibung der Ausführungsform relevanten Bestandteile reduziert. Der in der Ausführungsform vorgesehene Elektromagnet 4 ist wie im Zusammenhang mit den vorhergehenden Figuren beschrieben ausgeführt und weist diesen gegenüber keine Abweichungen auf. Auch hier reagiert der Anker 40 auf ein Magnetfeld. Wird nun der Strom durch die Spulenwicklung der Spule 44 eingeschaltet, so bildet sich ein Magnetfeld aus, in dem sich der Anker 40 zu orientieren sucht. Im in Fig. 8 gezeigten Ausführungsbeispiel ist der Stromfluss eingeschaltet, der Anker 40 ist gegen die Kraft der Rückstellfeder 46 nach rechts verschoben, ein möglicher Luftspalt zwischen dem Anker 40 und dem Kern 47 ist geschlossen. Auf der Ankerstange 41 aufgesetzt befindet sich der Bolzen 42, der im Ausführungsbeispiel wie in den Figuren 8 bis 10 dargestellt, nach Art eines Bolzenringes ausgeführt ist. Der ringartig ausgeführte Bolzen 42 wirkt mit der am Rastelement 5 vorgesehenen Nocke 80 zusammen. In der in Fig. 8 dargestellten aktivierten Stellung der Verriegelungseinheit, also bei strombeaufschlagter Spule 44, wird der Bolzen 42 durch die Ankerstange 41 derart versetzt, dass die Rastelemente 5, bzw. die daran angesetzte Klinke 51 aus der Verriegelungsposition ausgehoben wird. Im bestromten Zustand des Elektromagneten 4 kommt es somit zur Entriegelung des Kolbens, so dass dieser beweglich ist.

Die Rastaufnahme 20 ist als ringförmige Ausnehmung im Kolbenkopf 24 vorgesehen. Dies kann beispielsweise durch eine konzentrische Fräsung erreicht werden. Hierdurch wird die Rastaufnahme 20 zur Verfügung gestellt. Der Kolbenkopf 24 stellt eine weitere Rastaufnahme 20, beanstandet zur ersten Rastaufnahme 20 zur Verfügung. Hier wird die Rastaufnahme 20 dadurch erzeugt, dass eine stufenartige Ausfräsung des Kolbenkopfs 24 erfolgt. Der verbleibende Materialrest stellt dann die Rastaufnahme 20 zur Verfügung.

In Fig. 9 wird eine weitere Verriegelungsstellung der Verriegelungseinheit 1 gezeigt. Die Lage des Kolbens 2 ist mit der in Fig. 8 Gezeigten identisch. Der Elektromagnet 4 ist in Fig. 9 im unbestromten Zustand gezeigt. Hierdurch fällt der Anker 40 vom Kern 47 ab und es kommt aufgrund der Rückstellfeder 46 zur Verschiebung des Ankers 40 und der daran angeordneten Ankerstange 41. Vermittelt durch die Rückstellfeder 46 wird der Bolzen 42 in axialer Richtung vom Elektromagneten 4 weg verschoben. Dabei gleitet der Bolzen 42 bzw. dessen Mantelfläche auf den Nocken 80 auf, wodurch es zu einer radial nach außen gerichteten Bewegung des Rastelementes 5 kommt. Hierdurch wird ein Eingreifen der Klinke 51 in die Rastaufnahme 20 erreicht und eine erste Verriegelungsposition des Kolbens 2 eingenommen. Aufgrund der Ausgestaltung der Rastaufnahme 20, in der die Klinke 51 eingreift, kann der Kolben 2 nicht weiter auf den Elektromagneten 4 zu verschoben werden. Der Kolben 2 verharrt vielmehr in der Verriegelungsposition wie in Fig. 9 dargestellt. Eine axiale Bewegung des Kolbens 2 vom Elektromagneten weg ist nach wie vor möglich.

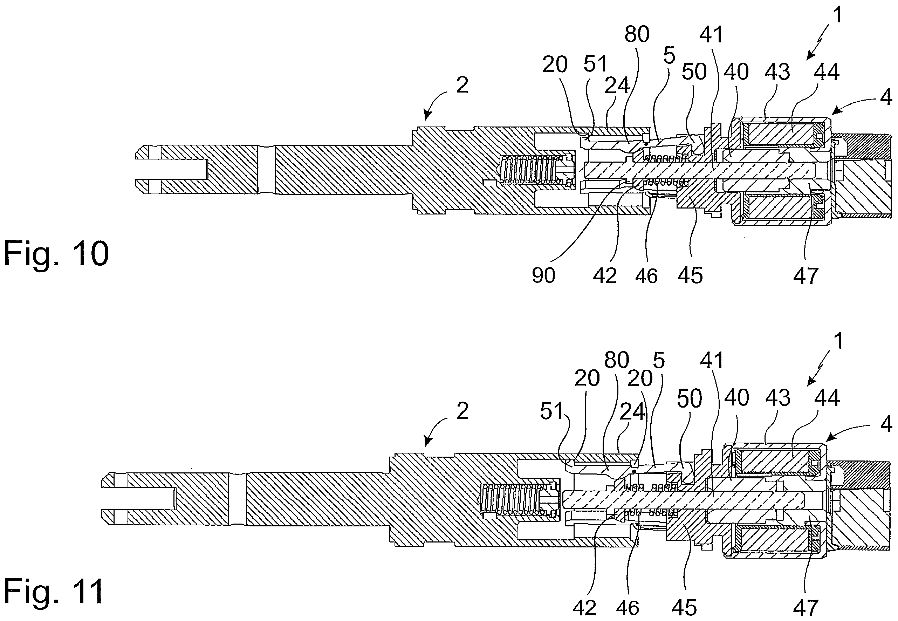

Fig. 10 zeigt eine zweite mögliche Position des Kolbens 2. In den Ausführungsbeispielen der Figuren 10 und 11 ist der Kolben axial in Richtung auf den Elektromagneten zu verschoben. Das Rastelement 5 bzw. dessen Klinke 51 ist in diesem Ausführungsbeispiel im Bereich der zweiten Rastaufnahme 20 positioniert. Im in Fig. 10 dargestellten Zustand ist der Elektromagnet 4 bestromt, wodurch es - wie bereits beschrieben - zur Komprimierung der Rückstellfeder 46 aufgrund der Bewegung der Ankerstange 41 kommt. Der Bolzen 42 steht in diesem Fall nicht mit dem Nocken 80 am Rastelement 5 in Eingriff, daher ist die Klinke 51 aus der Verriegelungsposition ausgehoben und liegt nicht in der Rastaufnahme 20 bzw. dem die Rastaufnahme 20 zur Verfügung stellenden Vorsprung im Inneren des zylindrischen Kolbenkopfes 24 ein. Diese Position bzw. Entriegelungsstellung lässt eine Verschiebung oder Bewegung des Kolbens 2 in axialer Richtung ungehindert zu. Während der Bestromung des Elektromagneten bleibt der Bolzen 42 und damit auch das Rastelement 5 in der in Fig. 5 dargestellten Position.

Die Rückstellfeder 46 wird durch die Verschiebung des Ankers 40 und der daran angeordneten Ankerstange 41 komprimiert. Dies wird ebenfalls vermittelt durch den Bolzen 42, der einen Sitz für die Rückstellfeder 46 zur Verfügung stellt. Um zu verhindern, dass aufgrund der Rückstellkraft der komprimierten Rückstellfeder 46 eine Verschiebung des Bolzens 42 stattfindet, ist an der Ankerstange 41 ein umlaufender Rand 90 bzw. Vorsprung vorgesehen, an dem der Bolzen 42 anliegt. Dieser umlaufende Rand 90 verhindert eine Verschiebung des Bolzens 42. Gleichzeitig nimmt bei Strombeaufschlagung des Elektromagneten 4 der umlaufende Rand 90 den Bolzen 42 mit und bewirkt somit eine Komprimierung der Rückstellfeder 46.

Wird, wie in Fig. 11 dargestellt, die Bestromung des Elektromagneten 4 beendet, so fällt der Anker 40 vom Kern 47 ab und die Rückstellfeder 46 bewirkt eine Verschiebung des Ankers 40 bzw. der Ankerstange 41 in axialer Richtung. Dabei wird der konisch ausgebildete Bolzen 42 auf die Nocke 80 am Rastelement 5 aufgeschoben bzw. gleitet auf diese auf und bewirkt eine radial nach außen gerichtete Bewegung des Rastelementes 5, woraufhin die Klinke 51 in die Rastaufnahme 20, die im Bolzenkopf 24 vorgesehen ist, in Eingriff gebracht wird. Das Rastelement 5 ist im Joch 45 angelenkt und kann aufgrund der Elastizität des Rastelementes 5 bei Verschiebung des Bolzens 42, bewirkt durch die Strombeaufschlagung des Elektromagneten 4 aus der Verriegelungsposition ausfedern und den Kolben 2 somit freigeben.

Die in den Figuren 8 bis 10 dargestellte Ausführungsform der Verriegelungseinheit 1 erlaubt somit eine Verriegelung des Kolbens 2 im unbestromten Zustand des Elektromagneten 4. Eine Freigabe des Kolbens 2 erfolgt demgegenüber durch Bestromung des Elektromagneten 4 und der dadurch vermittelten Ankerbewegung.

Neben den in den Fig. 1 bis 7 gezeigten Ausführungsformen wird somit eine weitere Ausführungsform der Verriegelungseinheit 1 zur Verfügung gestellt, die eine zuverlässige Verriegelung bzw. Entriegelung des Kolbens bzw. 2 einer Parksperre ermöglicht.

## Patentansprüche

1. Verriegelungseinheit, insbesondere für die Parksperre eines Automatikgetriebes, für das Verriegeln der Bewegung eines von einem Antrieb bewegbaren, insbesondere mit Druck beaufschlagbaren Kolbens (2), wobei die Verriegelungseinheit einen Elektromagneten (4) und mindestens ein Rastelement (5, 5a, 5b) aufweist und das Rastelement (5, 5a, 5b) mit dem Anker (40) beziehungsweise der Ankerstange (41) des Elektromagneten (4) oder mit einem vom Anker (40) beziehungsweise der Ankerstange (41) gehaltenen oder an dem Anker (40) bzw. der Ankerstange (41) angeordneten Bolzen (42) oder Bolzenring zusammenwirkt, wobei der Kolben (2) mindestens zwei voneinander entfernte Rastaufnahmen (20, 20a, 20b, 20c) aufweist und der Kolben (2) durch das haltende Zusammenwirken des Rastelementes (5, 5a, 5b) mit der jeweiligen Rastaufnahme (20, 20a, 20b, 20c), in unterschiedlichen Lagen des Kolbens (2), festlegbar ist, das Rastelement (5, 5a, 5b) aus Federstahl gebildet ist, am den Rastaufnahmen (20, 20a, 20b, 20c) nächstliegenden freien Ende des Rastelementes (5, 5a, 5b) wenigstens eine sich radial in Richtung der Rastaufnahmen (20, 20a, 20b, 20c) erstreckende klinkenartige Abwinklung (51) vorgesehen ist, die klinkenartige Abwinklung (51) flächig ausgebildet ist, und das Rastelement (5, 5a, 5b) gegenüberliegend zum den Rastaufnahmen (20, 20a, 20b, 20c) nächstliegenden freien Ende keine Abwinklung (51) aufweist.

2. Verriegelungseinheit nach Anspruch 1, **dadurch gekennzeichnet, dass** der Kolben (2) eine insbesondere in Richtung des Elektromagneten ausgerichtete, die Rastaufnahmen (20, 20a, 20b, 20c) aufweisende axiale Verlängerung (27), insbesondere einen Kolbenkopf (24) aufweist.

3. Verriegelungseinheit nach Anspruch 2, **dadurch gekennzeichnet, dass** die Verlängerung (27) als eine eine innere Mantelfläche aufweisende Rasthülse (22) ausgebildet ist und die Rastaufnahmen (20, 20a, 20b) als in der inneren Mantelfläche eingebrachte Ausnehmungen (20, 20a, 20b, 20c), insbesondere als Ring- oder Halbringnuten vorgesehen sind.

4. Verriegelungseinheit nach einem der vorhergehenden Ansprüche, **dadurch gekennzeichnet, dass** das Rastelement (5, 5a, 5b) als sich in axialer Richtung wenigstens bis in den Bereich der Rastaufnahmen (20, 20a, 20b, 20c) in den Kolben (2) hinein erstreckende, federnd gelagerte Zunge ausgebildet ist.

5. Verriegelungseinheit nach einem der vorhergehenden Ansprüche, **dadurch gekennzeichnet, dass** bei unbestromtem Elektromagneten (4) der Bolzen (42) oder Bolzenring derart positionierbar ist, dass das Rastelement (5, 5a, 5b) aus einer Verriegelungsposition in eine Entriegelungsposition bringbar ist und bei bestromtem Elektromagneten (4) der Bolzen (42) oder Bolzenring derart auf das Rastelement (5, 5a, 5b) einzuwirken vermag, dass dieses aus einer Entriegelungsposition in eine Verriegelungsposition bringbar ist.

6. Verriegelungseinheit nach einem der vorhergehenden Ansprüche, **dadurch gekennzeichnet, dass** bei bestromten Elektromagneten (4) der Bolzen (42) oder Bolzenring derart positionierbar ist, dass das Rastelement (5, 5a, 5b) aus einer Verriegelungsposition in eine Entriegelungsposition bringbar ist und bei unbestromten Elektromagneten (4) der Bolzen (42) oder Bolzenring derart auf das Rastelement (5, 5a, 5b) einzuwirken vermag, dass dieses aus einer Entriegelungsposition in eine Verriegelungsposition (1) bringbar ist.

7. Verriegelungseinheit nach einem der vorhergehenden Ansprüche, **dadurch gekennzeichnet, dass** die Rückstellfeder (46) dem Bolzen (42), Bolzenring und/oder der Ankerstange (41) zugeordnet ist und bei dem unbestromten Elektromagneten (4) eine Rückstellung des Bolzens (42) und/ oder Ankers in die Verriegelungsposition des Rastelementes (5, 5a, 5b) bewirkt und/oder die Rückstellfeder (46) bei bestromtem Elektromagneten (4) durch die Ankerbewegung komprimierbar ist und im unbestromten Zustand eine in axiale Richtung von dem Elektromagneten (4) weg gerichtete Rückstellkraft in den Anker (40) einträgt.

8. Verriegelungseinheit nach einem der vorhergehenden Ansprüche, **dadurch gekennzeichnet, dass** in einer ersten Rastposition eine axiale Bewegung des Kolbens (2) auf den Elektromagneten (4) zu und in einer zweiten Rastposition eine axiale Bewegung des Kolbens (2) von dem Elektromagneten (4) weg blockierbar ist.

9. Verriegelungseinheit nach einem der vorhergehenden Ansprüche, **dadurch gekennzeichnet, dass** der Bolzen (42) oder Bolzenring einen umlaufenden Vorsprung oder Flansch aufweist, der mit einem am Rastelement (5, 5a, 5b) angeordneten Nocken in Wirkverbindung bringbar ist, insbesondere wobei der umlaufende Vorsprung oder Flansch konisch ausgebildet ist.

10. Verriegelungseinheit nach einem der vorhergehenden Ansprüche, **dadurch gekennzeichnet, dass** die Rückstellfeder (46) einerseits am Elektromagneten (4) bzw. am oder im Joch (45) des Elektromagneten (4) und andererseits am Bolzen (42), Bolzenring bzw. einen am Bolzen (42) oder Bolzenring vorgesehenen Vorsprung oder Flansch sich abstützt.

11. Verriegelungseinheit nach einem der vorhergehenden Ansprüche, **dadurch gekennzeichnet, dass** das Rastelement (5, 5a, 5b) eine mit dem Bolzen (42) oder Bolzenring in Wirkverbindung stehende Fläche zur Verfügung stellt und bei Bewegung des Bolzens (42) oder Bolzenringes in axialer Richtung der Verriegelungseinheit (1), an oder über die Fläche das Rastelement (5, 5a, 5b) bzw. die klinkenartige Abwinklung radial in die bzw. aus der Rastaufnahme bewegbar ist.

12. Verriegelungseinheit nach einem der vorhergehenden Ansprüche, **dadurch gekennzeichnet, dass** sich die klinkenartige Abwinklung (51) radial in Richtung auf das Kolbenzentrum zu oder vom Kolbenzentrum weg erstreckt.

13. Verriegelungseinheit nach einem der vorhergehenden Ansprüche, **dadurch gekennzeichnet, dass** eine Bewegung des Bolzens, Bolzenringes oder Bolzenkopfes in eine radiale Bewegung des Rastelements umsetzbar ist und die klinkenartige Abwinklung in Abhängigkeit von der Vorspannung des Rastelements von einer Verriegeluns- in eine Freigabeposition bzw. von einer Freigabe- in eine Verriegelungsposition bringbar ist.

14. Getriebe, insbesondere Automatikgetriebe mit einer Parksperre mit einer Verriegelungseinheit (1) gemäß einem der Ansprüche 1 bis 13.

## Claims

1. Locking unit, in particular for the parking lock of an automatic transmission, for the locking of the motion of a piston (2) which can be moved by a drive, in particular to which can be applied pressure, wherein the locking unit has an electromagnet (4) and at least one detent element (5, 5a, 5b), and the detent element (5, 5a, 5b) interacts with the armature (40) or the armature rod (41) of the electromagnet (4) or with a bolt (42) or bolt ring held by the armature (40) or by the armature rod (41) or arranged on the armature (40) or the armature rod (41), wherein the piston (2) has at least two detent receptacles (20, 20a, 20b, 20c) distanced from one another and the piston (2) can be fixed by means of the holding interaction of the detent element (5, 5a, 5b) with the respective detent receptacle (20, 20a, 20b, 20c), in different positions of the piston (2), the detent element (5, 5a, 5b) is formed from spring steel, at the free end, nearest to the detent receptacles (20, 20a, 20b, 20c), of the detent element (5, 5a, 5b) at least one latch-like bend (51) is provided extending radially in the direction of the detent receptacles (20, 20a, 20b, 20c), the latch-like bend (51) is formed flatly, and the detent element (5, 5a, 5b) oppositely situated to the free end nearest to the detent receptacles (20, 20a, 20b, 20c) has no bend (51).

2. Locking unit according to claim 1, **characterised in that** the piston (2) has an axial extension (27), in particular a piston head (24), in particular oriented in the direction of the electromagnet and having the detent receptacles (20, 20a, 20b, 20c).

3. Locking unit according to claim 2, **characterised in that** the extension (27) is in the form of a detent sleeve (22) having an inner shell surface and the detent receptacles (20, 20a, 20b) are provided as recesses (20, 20a, 20b, 20c) introduced in the inner shell surface, in particular as annular or semi-annular grooves.

4. Locking unit according to any of the preceding claims, **characterised in that** the detent element (5, 5a, 5b) is in the form of a spring-loaded tongue extending in axial direction into the piston (2) at least as far as the region of the detent receptacles (20, 20a, 20b, 20c).

5. Locking unit according to any of the preceding claims, **characterised in that** when the electromagnet (4) is unenergised the bolt (42) or bolt ring can be positioned such that the detent element (5, 5a, 5b) can be brought out of a locking position into an unlocking position and when the electromagnet (4) is energised the bolt (42) or bolt ring is able to act on the detent element (5, 5a, 5b) such that said detent element can be brought out of an unlocking position into a locking position.

6. Locking unit according to any of the preceding claims, **characterised in that** when the electromagnet (4) is energised the bolt (42) or bolt ring can be positioned such that the detent element (5, 5a, 5b) can be brought out of a locking position into an unlocking position and when the electromagnet (4) is unenergised the bolt (42) or bolt ring is able to act on the detent element (5, 5a, 5b) such that said detent element can be brought out of an unlocking position into a locking position (1).

7. Locking unit according to any of the preceding claims, **characterised in that** the restoring spring (46) is assigned to the bolt (42), bolt ring and/or the armature rod (41) and, when the electromagnet (4) is unenergised, effects a restoration of the bolt (42) and/or armature into the locking position of the detent element (5, 5a, 5b) and/or the restoring spring (46), when the electromagnet (4) is energised, can be compressed by the armature movement and in an unenergised state carries a restoring force, directed in axial direction away from the electromagnet (4), into the armature (40).

8. Locking unit according to any of the preceding claims, **characterised in that** in a first detent position an axial movement of the piston (2) towards the electromagnet (4) and in a second detent position an axial movement of the piston (2) away from the electromagnet (4) can be blocked.

9. Locking unit according to any of the preceding claims, **characterised in that** the bolt (42) or bolt ring has a circumferential protrusion or flange which can be brought in operative connection with a cam arranged on the detent element (5, 5a, 5b), in particular wherein the circumferential protrusion or flange is formed conically.

10. Locking unit according to any of the preceding claims, **characterised in that** the restoring spring (46) rests on the one hand on the electromagnet (4) or on or in the yoke (45) of the electromagnet (4) and on the other hand on the bolt (42), bolt ring or a protrusion or flange provided on the bolt (42) or bolt ring.

11. Locking unit according to any of the preceding claims, **characterised in that** the detent element (5, 5a, 5b) makes available a surface being in operative connection with the bolt (42) or bolt ring, and, when the bolt (42) or bolt ring is moved in axial direction of the locking unit (1), can be moved to or across the surface of the detent element (5, 5a, 5b) or the latch-like bend radially into the or out of the detent receptacle.

12. Locking unit according to any of the preceding claims, **characterised in that** the latch-like bend (51) extends radially in the direction towards the piston centre or away from the piston centre.

13. Locking unit according to any of the preceding claims, **characterised in that** a movement path of the bolt, bolt ring or bolt head can be converted into a radial movement of the detent element and the latch-like bend can be brought from a locking position into a release position or from a release position into a locking position depending on the bias of the detent element.

14. Transmission, particularly automatic transmission with an immobiliser with a locking unit (1) according to any of claims 1 to 13.

## Revendications

1. Unité de verrouillage, en particulier pour le frein de stationnement d'une boîte de vitesses automatique, destinée à verrouiller le déplacement d'un piston (2) pouvant être mis en mouvement par un entraînement, en particulier pouvant être soumis à une pression, l'unité de verrouillage comportant un électroaimant (4) et au moins un élément d'enclenchement (5, 5a, 5b), et l'élément d'enclenchement (5, 5a, 5b) coopérant avec l'induit (40) ou respectivement la tige d'induit (41) de l'électroaimant (4) ou avec un boulon (42) ou cercle de boulonnage retenu par l'induit (40) ou respectivement la tige d'induit (41) ou disposé sur l'induit (40) ou respectivement la tige d'induit (41), le piston (2) comportant au moins deux logements d'enclenchement (20, 20a, 20b, 20c) espacés l'un de l'autre et le piston (2) pouvant être immobilisé en différentes positions du piston par la coopération de retenue de l'élément d'enclenchement (5, 5a, 5b) avec le logement d'enclenchement (20, 20a, 20b, 20c) respectif, l'élément d'enclenchement (5, 5a, 5b) étant constitué d'acier à ressorts, à l'extrémité libre de l'élément d'enclenchement (5, 5a, 5b) la plus proche des logements d'enclenchement (20, 20a, 20b, 20c) étant prévu au moins un coude (51) en forme de cliquet s'étendant radialement en direction des logements d'enclenchement (20, 20a, 20b, 20c), le coude en forme de cliquet (51) ayant une forme plate, et l'élément d'enclenchement (5, 5a, 5b) ne comportant aucun coude (51) opposé à l'extrémité libre la plus proche des logements d'enclenchement (20, 20a, 20b, 20c).

2. Unité de verrouillage selon la revendication 1, **caractérisée en ce que** le piston (2) comporte un prolongement axial (27) en particulier orienté en direction de l'électroaimant, comportant les logements d'enclenchement (20, 20a, 20b, 20c), en particulier une tête de piston (24).

3. Unité de verrouillage selon la revendication 2, **caractérisée en ce que** le prolongement (27) est conçu sous forme d'un manchon d'enclenchement (22) comportant une surface enveloppante interne et les logements d'enclenchement (20, 20a, 20b) sont prévus sous forme d'évidements (20, 20a, 20b, 20c) pratiqués dans la surface enveloppante interne, en particulier sous forme de rainures annulaires ou semi-annulaires.

4. Unité de verrouillage selon l'une quelconque des revendications précédentes, **caractérisée en ce que** l'élément d'enclenchement (5, 5a, 5b) est conçu sous forme de lame montée en faisant ressort s'étendant à l'intérieur du piston (2) en direction axiale au moins jusque dans la zone des logements d'enclenchement (20, 20a, 20b, 20c).

5. Unité de verrouillage selon l'une quelconque des revendications précédentes, **caractérisée en ce que** lorsque l'électroaimant (4) n'est pas alimenté le boulon (42) ou le cercle de boulonnage est positionnable de telle façon que l'élément d'enclenchement (5, 5a, 5b) peut être amené d'une position de verrouillage en une position de déverrouillage et lorsque l'électroaimant (4) est alimenté le boulon (42) ou le cercle de boulonnage peut agir sur l'élément d'enclenchement (5, 5a, 5b) de telle façon que ce dernier peut être amené d'une position de déverrouillage en une position de verrouillage.

6. Unité de verrouillage selon l'une quelconque des revendications précédentes, **caractérisée en ce que** lorsque l'électroaimant (4) est alimenté le boulon (42) ou le cercle de boulonnage est positionnable de telle façon que l'élément d'enclenchement (5, 5a, 5b) peut être amené d'une position de verrouillage en une position de déverrouillage et lorsque l'électroaimant (4) n'est pas alimenté le boulon (42) ou le cercle de boulonnage peut agir sur l'élément d'enclenchement (5, 5a, 5b) de telle façon que ce dernier peut être amené d'une position de déverrouillage en une position de verrouillage (1).

7. Unité de verrouillage selon l'une quelconque des revendications précédentes, **caractérisée en ce que** le ressort de rappel (46) est affecté au boulon (42), au cercle de boulonnage et/ou à la tige d'induit (41) et lorsque l'électroaimant (4) n'est pas alimenté provoque un rappel du boulon (42) et/ou de l'induit en la position de verrouillage de l'élément d'enclenchement (5, 5a, 5b) et/ou lorsque l'électroaimant (4) est alimenté le ressort de rappel (46) est comprimable par le déplacement de l'induit et à l'état non alimenté fournit dans l'induit (40) une force de rappel orientée en direction axiale à l'opposé de l'électroaimant (4).

8. Unité de verrouillage selon l'une quelconque des revendications précédentes, **caractérisée en ce que** dans une première position d'enclenchement un déplacement axial du piston (2) peut être bloqué en direction de l'électroaimant (4) et dans une deuxième position d'enclenchement un déplacement axial du piston (2) peut être bloqué dans une direction à l'opposé de l'électroaimant (4).

9. Unité de verrouillage selon l'une quelconque des revendications précédentes, **caractérisée en ce que** le boulon (42) ou le cercle de boulonnage comporte une saillie ou bride circulaire qui peut être amenée en liaison fonctionnelle avec un taquet disposé sur l'élément d'enclenchement (5, 5a, 5b), en particulier la saillie ou bride circulaire ayant une forme conique.

10. Unité de verrouillage selon l'une quelconque des revendications précédentes, **caractérisée en ce que** le ressort de rappel (46) s'appuie d'une part sur l'électroaimant (4) ou sur ou dans la culasse (45) de l'électroaimant (4) et d'autre part sur le boulon (42), le cercle de boulonnage ou une saillie ou bride prévue sur le boulon (42) ou le cercle de boulonnage.

11. Unité de verrouillage selon l'une quelconque des revendications précédentes, **caractérisée en ce que** l'élément d'enclenchement (5, 5a, 5b) est doté d'une surface se trouvant en liaison fonctionnelle avec le boulon (42) ou le cercle de boulonnage et lors du déplacement du boulon (42) ou du cercle de boulonnage en direction axiale de l'unité de verrouillage (1), sur ou au-dessus de la surface l'élément d'enclenchement (5, 5a, 5b) ou le coude en forme de cliquet peut être déplacé radialement dans le ou hors du logement d'enclenchement.

12. Unité de verrouillage selon l'une quelconque des revendications précédentes, **caractérisée en ce que** le coude (51) en forme de cliquet s'étend radialement en direction du centre du piston ou dans une direction opposée au centre du piston.

13. Unité de verrouillage selon l'une quelconque des revendications précédentes, **caractérisée en ce qu'**un déplacement du boulon, du cercle de boulonnage ou de la tête de boulon peut être converti en un déplacement radial de l'élément d'enclenchement et le coude en forme de cliquet peut, en fonction de la tension préliminaire de l'élément d'enclenchement, être amené d'une position de verrouillage en une position de libération ou, respectivement, d'une position de libération en une position de verrouillage.

14. Boîte de vitesses, en particulier boîte de vitesse automatique, munie d'un frein de stationnement comportant une unité de verrouillage (1) selon l'une quelconque des revendications 1 à 13.
